**Europäisches Patentamt**

**European Patent Office**

**Office européen des brevets**

(19)

(11) Veröffentlichungsnummer : **0 306 506 B1**

(12) # EUROPÄISCHE PATENTSCHRIFT

(45) Veröffentlichungstag der Patentschrift :
**17.06.92 Patentblatt 92/25**

(51) Int. Cl.⁵ : **H01S 3/097**

(21) Anmeldenummer : **88902104.4**

(22) Anmeldetag : **11.03.88**

(86) Internationale Anmeldenummer :
**PCT/DE88/00137**

(87) Internationale Veröffentlichungsnummer :
**WO 88/07272 22.09.88 Gazette 88/21**

(54) **MIKROWELLENGEPUMPTER HOCHDRUCKGASENTLADUNGSLASER.**

(30) Priorität : **14.03.87 DE 3708314**

(43) Veröffentlichungstag der Anmeldung :
**15.03.89 Patentblatt 89/11**

(45) Bekanntmachung des Hinweises auf die
Patenterteilung :
**17.06.92 Patentblatt 92/25**

(84) Benannte Vertragsstaaten :
**FR GB**

(56) Entgegenhaltungen :
**US-A- 4 481 634**

(56) Entgegenhaltungen :
**Topical Meeting on Excimer Lasers, 10. 12
January 1983, Incline Village, Nevada, Optical
Society of America (US), R.W.Waynant et al.:
"Design considerations for RF pumping of
rare gas halide lasers", pages MA4-1 - MA4-5
Electronics and Communications in Japan, volume 54-B, No 1, January 1971 (New York, US),
M. Katsurai et al.:"Microwave-excited ionized
laser with external magnetic field", pages
61-68**

(73) Patentinhaber : **Deutsche Forschungsanstalt
für Luft- und Raumfahrt e.V.
Linder Höhe Postfach 90 60 58
W-5000 Köln 90 (DE)**

(72) Erfinder : **GEKAT, Frank
Kolumbusstrasse 37
W-7022 Leinfelden-Echterdingen (DE)**

(74) Vertreter : **Hoeger, Stellrecht & Partner
Uhlandstrasse 14 c
W-7000 Stuttgart 1 (DE)**

## Beschreibung

Die Erfindung betrifft einen mikrowellengepumpten Hochdruckgasentladungslaser, insbesondere einen Excimerlaser, mit einem optischen Resonator, einem in diesem angeordneten und sich längs einer optischen Achse von diesem erstreckenden Resonatorgasvolumen, mit einer das Resonatorgasvolumen zwischen sich einschließenden Mikrowelleneinkopplungsstruktur und mit einem mit letzterer verbundenen Mikrowellengenerator.

Derartige Hochdruckgasentladungslaser arbeiten mit Drucken gröber oder gleich 100 mbar, einer elektrischen Leistungsdichte gröber oder gleich einem Kilowatt pro $cm^3$ bezogen auf ein aktives Resonatorgasvolumen und einer Frequenz von gröber oder gleich 100 MHz, insbesondere im Mikrowellenbereich. Eine besonders bevorzugte Ausführung dieser Hochdruckgasentladungslaser sind Excimerlaser.

Bei derartigen Hochdruckgasentladungslasern ist das alktive Resonatorgasvolumen in einem Rohr eingeschlossen, welches koaxial zu der optischen Achse verläuft und in einem Bereich maximaler elektrischer Feldstärke innerhalb der Mikrowelleneinkopplungsstruktur positioniert ist. Durch die Mikrowellenanregung wird in dem Resonatorgasvolumen eine Hochdruckgasentladung gezündet und aufrecht erhalten. Eine Lasertätigkeit tritt dadurch ein, daß durch die Hochdruckgasentladung in ihre laseraktiven Niveaus angeregte Gasteilchen kohärent licht emmitieren. Voraussetzung für eine optimale lasertätigkeit ist jedoch, daß diese Emission nahe der optischen Achse des Resonators erfolgt.

Aufgrund des hohen Drucks und der dadurch bedingten hohen Elektronendichte in einer derartigen Hochdruckgasentladung entsteht jedoch ein als Wandkollaps bezeichnetes Phänomen, das eine räumliche Instabilität der Entladung darstellt. Bei diesem Wandkollaps ist die Energie der in der Gasentladung enthaltenen Elektronen und damit auch die Emission der Gasteilchen im Bereich von Wandflächen des Rohrs wesentlich gröber und nimmt zur Mitte, also zur optischen Achse hin, ab; die Emission hat sogar oftmals im Bereich der optischen Achse ein Minimum.

Derartige Effekte sind beispielsweise in der Veröffentlichung von R.W. Waynant, D.P. Christensen und W.M. Bollen, jun., mit dem Titel "Design Considerations for RF Pumping of Rare Gas Halide Lasers", veröffentlicht in Topical Meeting on Excimer Lasers 1/83 in Incline Village, Nevada, bekannt.

Zur Vermeidung eines derartigen Wandkollapses wurde bisher so vorgegangen, daß man ein Rohr mit möglichst geringem Durchmesser gewählt hat, so daß sich das Emissionsminimum im Bereich der optischen Achse nur unwesentlich ausgewirkt hat.

Abgesehen von mit derartig kleinen Durchmessern des Resonatorgasvolumens verbundenen Justierproblemen, ist eine derartige Verringerung des Resonatorgasvolumens bei insbesondere kommerziellen Laseranwendungen nicht tragbar. Außerdem wirkt sich trotz der Verringerung des Querschnitts des Rohrs der Wandkollaps nachteilig auf die Laserleistung und auch auf die Modenreinheit aus, da diese bekanntlich bei stabilen Resonatoren immer dann optimal sind, wenn die Emission im Bereich der optischen Achse am größten ist.

Ausgehend von diesem Stand der Technik liegt der Erfindung die Aufgabe zugrunde, einen Hochdruckgasentladungslaser der gattungsgemäßen Art derart zu verbessern, daß ein Wandkollaps weitgehend unterdrückt wird.

Diese Aufgabe wird bei einem Hochdruckgasentladungslaser der eingangs beschriebenen Art erfindungsgemäß dadurch gelöst, daß innerhalb des Resonatorgasvolumens in einer Richtung quer zur optischen Achse ein mittlerer Bereich mit einer über einem Schwellwert für eine Hochdruckgasentladung liegenden elektrischen Feldstärke vorgesehen ist, an welchen sich beiderseits jeweils äußere Bereiche mit einer unterhalb des Schwellwerts für die Hochdruckgasentladung liegenden Feldstärke anschließen.

Die durch die erfindungsgemäße Lösung geschaffene Feldstruktur ermöglicht es, einen Wandkollaps weitgehend zu unterdrücken, da die Hochdruckgasentladung quer zur optischen Achse nicht mehr allseitig von Wandflächen umgrenzt ist, so daß sich ein typischer Wandkollaps mit einer ringförmig um die optische Achse angeordneten maximalen Emission nicht mehr ausbilden kann, da das eine Hochdruckgasentladung durchführende Lasergas im Resonatorgasvolumen lediglich von Lasergas umgeben ist, welches seinerseits keine Hochdruckgasentladung durchführt.

Eine vorteilhafte Ausführungsform des erfindungsgemäßen Hochdruckgasentladungslasers sieht vor, daß sich die Feldstärke beim Übergang von den mittleren zu den äußeren Bereichen sprunghaft ändert. Durch dieses zusätzliche Erfordernis wird erreicht, daß die Hochdruckgasentladung in dem Resonatorgasvolumen in dem mittleren Bereich stabilisiert wird und nicht quer zur optischen Achse über diesen mittleren Bereich, beispielsweise bei kleinen Druck- oder Leistungsschwankungen,in Richtung der äußeren Bereiche ausdehnt und damit ebenfalls wiederum zu einer räumlichen und zeitlichen Instabilität der Hochdruckgasertladung beiträgt.

Bei den bisher beschriebenen Ausführungsformen wurde nicht genau festgelegt, wie das Resonatorgasvolumen in der Mikrowelleneinkopplungsstruktur angeordnet sein soll. Eine bevorzugte Möglichkeit sieht vor,

EP 0 306 506 B1

daß das Resonatorgasvolumen von einem Gasrohr umschlossen ist. Dies hat den Vorteil, daß die Gasmenge für das Resonatorgasvolumen gering gehalten werden kann und daß auch keine Probleme mit einem Abschluß der Mikrowelleneinkopplungsstruktur gegenüber dem Mikrowellengenerator auftreten, in den das Resonatorgas möglichst nicht eintreten sollte. Außerdem kann dieses Gasrohr stirnseitig mit Fenstern, insbesondere mit Brewsterfenstern ausgestattet sein, so daß auch ein Austritt des Laserstrahls aus dem Resonatorgasvolumen keine Probleme bereitet.

Zweckmäßigerweise ist vorgesehen, daß das Gasrohr aus dielektrischem Material hergestellt ist.

Eine andere bevorzugte Ausführungsform des erfindungsgemäßen Hochdruckgasentladungslasers sieht vor, daß das Resonatorgasvolumen von der Mikrowelleneinkopplungsstruktur umschlossen ist. Bei einem derartigen Aufbau hat man den Vorteil, daß kein zusätzliches Gasrohr vorgesehen sein muß, so daß sämtliche durch dieses bedingten Probleme entfallen. Allerdings muß dann die Mikrowelleneinkopplungsstuktur selbst gasdicht gegenüber dem Mikrowellengenerator und den übrigen Mikrowellenleitungen abgeschlossen sein und außerdem noch Fensteröffnungen zum Auskoppeln des Laserstrahls aufweisen.

Besonders zweckmäßig ist es, wenn das Resonatorgasvolumen in Richtung quer zur optischen Achse über die von der elektrischen Feldstärke durchsetzten Bereiche hinausreicht.

Wie bereits eingangs geschildert, ist eines der Ziele des erfindungsgemäßen Hochdruckgasentladungslasers, eine räumlich möglichst homogene Hochdruckgasentladung zu schaffen. Da der Schwellwert für die elektrische Feldstärke, ab welcher eine solche Hochdruckgasentladung brennt, und der Druck des Lasergases miteinander korreliert sind, könnte bei einem Feldstärkegradient quer zur optischen Achse im mittleren Bereich eine räumliche Schwankung der Bereiche maximaler Emission dadurch entstehen, daß geringfügige Druckschwankungen im Resonatorgasvolumen auftreten. Derselbe Effekt könnte durch Schwankungen in der elektrischen Feldstärke bedingt sein. Aus diesem Grunde ist es vorteilhaft, wenn die Feldstärke innerhalb des mittleren Bereichs quer zur optischen Achse konstant ist, so daß selbst Schwankungen der elektrischen Feldstärke oder des Drucks in Resonatorgasvolumen innerhalb des mittleren Bereichs keine räumlichen Verschiebungen der Bereiche mit maximaler Emission bewirken.

Bei den bisher beschriebenen Ausführungsbeispielen des erfindungsgemäßen Hochdruckgasentladungslasers wurde nicht im einzelnen festgelegt, wie eine Ausbreitungsrichtung der Mikrowellen relativ zur optischen Achse und somit auch zum Resonatorgasvolumen verlaufen soll. So ist es beispielsweise vorteilhaft, wenn die Ausbreitungsrichtung der Mikrowellen in der Mikrowelleneinkopplungsstruktur parallel zur optischen Achse verläuft. Ein derartiger Aufbau hat den Vorteil, daß insbesondere bei laufenden Wellen eine Ausmittlung von lokal unterschiedlichen elektrischen Feldstärken längs der optischen Achse auftritt und somit im zeitlichen Mittel eine homogene Anregung des gesamten Resonatorgasvolumens erreicht wird.

Um eine möglichst gleichmäßige Anregung und Leistungsabsorption des Resonatorgases über die gesamte Mikrowelleneinkopplungsstruktur zu erreichen, ist es vorteilhaft, wenn die elektrische Feldstärke im mittleren Bereich längs der Ausbreitungsrichtung der Mikrowellen konstant ist.

Andererseits kann es aber auch vorteilhaft sein, wenn die Ausbreitungsrichtung der Mikrowellen in der Mikrowelleneinkopplungsstruktur quer zur optischen Achse verläuft, da dann ein homogenes elektrisches Feld längs der optischen Achse auf einfachste Weise erreichbar ist.

Bei der Mikrowelleneinkopplungsstruktur ist es ebenfalls grundsätzlich möglich, zwei unterschiedliche Arten des Aufbaus vorzusehen. So ist es beispielsweise zur Ausmittlung von Inhomogenitäten des elektrischen Feldes vorteilhaft, wenn die Mikrowelleneinkopplungsstruktur eine Travelling-wave-Struktur ist. Dagegen bietet eine resonante Mikrowelleneinkopplungsstruktur den Vorteil, im Bereich der optischen Achse ein erhöhtes elektrisches Feld zu erzeugen, allerdings mit dem Nachteil, daß die elektrische Feldstärke längs der optischen Achse eventuell inhomogen sein könnte.

Die Mikrowelleneinkopplungsstruktur als solche wurde hinsichtlich ihrer körperlichen Merkmale noch nicht näher definiert und kann in beliebiger Art und Weise ausgebildet sein, sofern sie in der Lage ist, die erfindungsgemäße elektrische Feldverteilung relativ zu dem Resonatorgasvolumen zu erzeugen. Eine besondere Ausführungsform einer Mikrowelleneinkopplungsstruktur sieht vor, daß diese einen oberhalb und einen unterhalb des Resonatorgasvolumens angeordneten Leiter aufweist.

Dieser Leiter braucht nicht unmittelbar dem Resonatorgasvolumen zugewandt zu sein. Es ist beispielsweise auch möglich, zwischen dem Leiter und dem Resonatorgasvolumen ein Dielektrikum anzuordnen, da dieses keine Herabsetzung der elektrischen Feldstärke zwischen den Leitern zur Folge hat.

Um durch diese Leiter eindeutig einen mittleren Bereich im Resonatorgasvolumen zu definieren, in welchem die elektrische Feldstärke einen Schwellwert für die Hochdruckgasentladung überschreitet, ist vorgesehen, daß mindestens einer der Leiter sich in Richtung der optischen Achse des Resonatorgasvolumens mit konstanter Breite erstreckt. Durch diesen Leiter mit seiner konstanten Breite wird ein Feldstärkebereich definiert, in welchem die Bedingungen für eine Hochdruckgasentladung festgelegt sind, während seitlich des Leiters die Feldstärke den Schwellwert für die Hochdruckgasentladung nicht überschreitet. Dabei kann die Mikrowelleneinkopplungsstruktur seitlich des Leiters ebenfalls aus leitfähigem Material bestehen, der Leiter ist jedoch so anzuordnen, daß dieser relativ zu seiner Umgebung eine den Schwellwert für die Hochdruckgasentladung überschreitende elektrische Feldstärke hervorruft.

Eine Möglichkeit, ein derartiges elektrisches Feld zu erzeugen ist dann gegeben, wenn mindestens einer der Leiter einen rechteckigen Querschnitt aufweist und durch seinen geringeren Abstand von dem gegenüberliegenden Leiter relativ zu übrigen Wandbereichen der Mikrowelleneinkopplungsstruktur ein erhöhtes elektrisches Feld bewirkt.

Die Homogenität des elektrischen Feldes kann noch dadurch verbessert werden, daß die Leiter einen profilierten Querschnitt ähnlich eines Stappaerts-, oder Chang- oder Rogowski-Profils aufweisen.

Bei den bisher beschriebenen Ausführungsbeispielen wurde nicht angegeben, wie die Mikrowellen in die Mikrowelleneinkopplungsstruktur selbst eingekoppelt werden sollen. So ist es beispielsweise möglich, die Mikrowelleneinkopplungsstruktur bei einem Travelling-wave-System einfach als Teil eines Mikrowellenleiters auszubilden. Dies hat jedoch den Nachteil, daß aufgrund der im Verlauf dieser Mikrowelleneinkopplungsstruktur stattfindender Energieabsorption durch die Hochdruckgasentladung die Feldstärke längs der Mikrowelleneinkopplungsstruktur abnimmt. Aus diesem Grund ist es vorteilhaft, wenn die Mikrowelleneinkopplungsstruktur durch eine Richtkopplerstruktur an eine Mikrowellenleitung angekoppelt ist, da dann eine Variation der Ankopplung der Mikrowelleneinkopplungsstruktur an die Mikrowellenleitung möglich ist. So ist es am günstigsten, wenn die Richtkopplerstruktur so aufgebaut ist, daß in der Mikrowelleneinkopplungsstruktur in Richtung der optischen Achse eine im wesentlichen gleichmäßige Feldstärkeverteilung entsteht. Dies kann durch eine Variation des Kopplungsfaktors längs der optischen Achse in einfacher Weise erreicht werden.

Eine besonders bevorzugte Ausführungsform einer Mikrowelleneinkopplungsstruktur sieht vor, daß diese eine Hohlleiterstruktur ist. d. h., daß sich die Mikrowellen innerhalb eines Hohlleiters fortpflanzen. Hierbei ist es besonders vorteilhaft, wenn die Hohlleiterstruktur mindestens einen nach innen abstehenden Steg aufweist, welcher im Innern der Hohlleiterstruktur von dem Hohlleiter absteht. Noch vorteilhafter ist es jedoch, wenn in dem Hohlleiter zwei einander gegenüberliegende Stege ausgebildet sind. Diese Stege können dann entweder aus dielektrischem Material oder als Leiter ausgebildet sein.

Um nun in Längsrichtung der Mikrowelleneinkopplungsstruktur eine konstante Feldstärke im mittleren Bereich zu erreichen, ist vorgesehen, daß entweder einer oder beide Stege eine in Längsrichtung zur optischen Achse schräg zu dieser verlaufende Frontfläche aufweist.

Andererseits ist es jedoch ebenfalls denkbar, die Mikrowelleneinkopplungsstruktur als Einkoppelleiter aufweisende TEM-Wellenleiterstruktur auszubilden. In diesem Fall erfolgt die Fortpflanzung der Mikrowellen zwischen zwei im Abstand und parallel zueinander verlaufenden Bandleitern.

Um auch hier konstante Feldstärke in Längsrichtung der optischen Achse zu erreichen, ist bei dieser Struktur vorgesehen, daß mindestens ein Einkoppelleiter in Längsrichtung der optischen Achse schräg zu dieser verläuft.

Bezüglich des Resonatorgasvolumens selbst wurden keine näheren Ausgestaltungen beschrieben. So ist es vorteilhaft, wenn das Resonatorgasvolumen ein abgeschlossenes Volumen ist, d. h. wenn es sich bei dem Resonatorgas um ein stehendes Gas handelt. Dadurch werden zusätzliche Schwierigkeiten bezüglich der räumlichen Stabilität der Hochdruckgasentladung vermieden.

Dagegen ist es dann, wenn insbesondere mit hohen Leistungen gearbeitet werden soll, günstig, wenn das Resonatorgasvolumen gasdurchströmt ist, da dadurch eine Regenerierung und eventuell auch eine Abkühlung des Resonatorgases außerhalb möglich ist.

Um Störungen der Laseremission durch eventuelle Reflexionen zu vermeiden, ist es vorteilhaft, wenn dem mittleren Bereich des Resonatorgasvolumens zugewandte Oberflächen reflexionsfrei ausgebildet sind. Insbesondere ist hierbei daran zu denken, daß dem mittleren Bereich des Resonatorgasvolumens zugewandte Oberflächen der Leiter reflexionsfrei ausgebildet sind. Zusätzliche Verbesserungen, insbesondere bei Verwendung eines Gasrohres, sind dadurch möglich, daß dem mittleren Bereich des Resonatorgasvolumens zugewandte Oberflächen des Gasrohrs reflexionsfrei ausgebildet sind.

Schließlich kann es noch günstig sein, wenn die Mikrowelleneinkopplungsstruktur schraubenförmig um die optische Achse verdreht ist, denn damit kann eine bezüglich der optischen Achse in radialer Richtung gleichmäßige Anregung erreicht werden.

Weitere Merkmale und Vorteile des erfindungsgemäßen Hochdruckgasentladungslasers sind Gegenstand der nachfolgenden Beschreibung sowie der zeichnerischen Darstellung einiger Ausführungsbeispiele. In der Zeichnung zeigen :

Fig. 1 eine schematische, aufgebrochene Darstellung eines ersten Ausführungsbeispiels;
Fig. 2 eine Teilansicht aus dem aufgebrochenen Bereich in Fig. 1;
Fig. 3 einen Schnitt längs Linie 3-3 in Fig. 1;
Fig. 4 eine zweite Variante des ersten Ausführungsbeispiels;

Fig. 5 eine dritte Variante des ersten Ausführungsbeispiels;

Fig. 6 eine Abwandlung des ersten Ausführungsbeispiels in Fig. 3;

Fig. 7 eine Abwandlung der zweiten Variante in Fig. 4;

Fig. 8 eine vierte Variante des ersten Ausführungsbeispiels;

Fig. 9 eine fünfte Variante des ersten Ausführungsbeispiels;

Fig. 10 ein zweites Ausführungsbeispiel;

Fig. 11 eine Variante des zweiten Ausführungsbeispiels;

Fig. 12 ein drittes Ausführungsbeispiel des erfindungsgemäßen Hochdruckgasentladungslasers;

Fig. 13 einen Schnitt längs Linie A-A in Fig. 12 einer ersten Variante;

Fig. 14 einen Schnitt längs Linie A-A in Fig. 12 einer zweiten Variante;

Fig. 15 einen Schnitt längs Linie 15-15 in Fig. 14;

Fig. 16 einen Schnitt längs Linie A-A in Fig. 12 einer dritten Variante;

Fig. 17 einen Schnitt längs Linie 17-17 in Fig. 16;

Fig. 18 ein viertes Ausführungsbeispiel des erfindungsgemäßen Hochdruckgasentladungslasers;

Fig. 19 einen Schnitt längs Linie 19-19 in Fig. 18;

Fig. 20 eine Draufsicht auf das vierte Ausführungsbeispiel in Fig. 18;

Fig. 21 einen Querschnitt durch eine erste Variante des vierten Ausführungsbeispiels;

Fig. 22 einen Querschnitt durch eine zweite Variante des vierten Ausführungsbeispiels;

Fig. 23 einen Schnitt längs Linie 23-23 in Fig. 24 durch ein fünftes Ausführungsbeispiel des erfindungsgemäßen Hochdurchgasentladungslasers;

Fig. 24 eine Draufsicht auf das fünfte Ausführungsbeispiel.

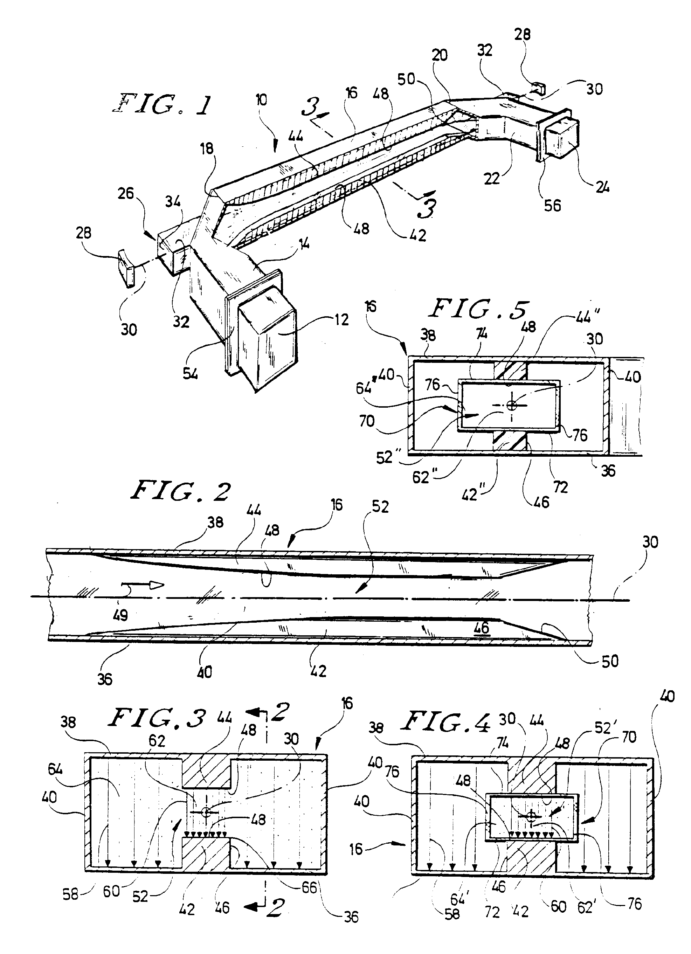

Ein als Ganzes mit 10 bezeichnetes erstes Ausführungsbeispiel eines erfindungsgemäßen Hochdruckgasentladungslasers, dargestellt in den Fig. 1 bis 4, umfaßt einen Mikrowellengenerator 12, an welchen sich ein zu einer Mikrowelleneinkopplungsstruktur 16 führendes Hohlleiterstück 14 anschließt, welches mit einem Eingang 18 dieser Mikrowelleneinkopplungsstruktur 16 verbunden ist. An einen Ausgang 20 der Mikrowelleneinkopplungsstruktur schließt sich wiederum ein Hohlleiterstück 22 an, welches mit einem Mikrowellensumpf 24 abgeschlossen ist.

Ein als Ganzes mit 26 bezeichneter optischer Resonator umfaßt zwei konzentrisch zu einer optischen Achse 30 angeordnete Spiegel 28. Die optische Achse 30 durchsetzt die Mikrowelleneinkopplungsstruktur 16 koaxial, welche auf seiten ihres Eingangs 18 sowie auf seiten ihres Ausgangs 16 noch jeweils einen Ansatz 32 aufweist, welcher mit einem optisch durchlässigen Fenster 34 abgeschlossen ist.

Die gesamte Mikrowelleneinkopplungsstruktur 16 ist, wie in Fig. 1 dargestallt, ein Rechteckhohlleiter mit einer unteren Wand 36, einer oberen Wand 38 und zwei Seitenwänden 40. Dieser Hohlleiter erstreckt sich von seinem Eingang 18 bis zu seinem Ausgang 20 längs der diesen mittig durchsetzenden optischen Achse 30. Sowohl die untere Wand 36 als auch die obere Wand 38 sind mittig jeweils mit einem Steg 42 bzw. 44 versehen, welcher sich ebenfalls parallel zu der optischen Achse in Längsrichtung der Mikrowelleneinkopplungsstruktur erstreckt und sich jeweils von einer Innenseite der unteren Wand 36 und der oberen Wand 38 erhebt und in ein Inneres des Hohlleiters hineinragt. Jeder Steg 42, 44 weist zwei im wesentlichen zu den Seitenwänden 40 parallele Seitenflächen 46 sowie eine ungefähr zu der jeweiligen unteren oder oberen Wand 36, 38 parallele, der optischen Achse 30 zugewandte Frontfläche 48 auf. Die Stege 42, 44 erstrecken sich in der Mikrowelleneinkopplungsstruktur 16 von deren Eingang 18 bis zu deren Ausgang 20, wobei sie jeweils im Bereich des Eingangs 18 und des Ausgangs 20 mit einer Abschrägung 50 versehen sind und somit in diesem Bereich auslaufen.

Bei dem beschriebenen ersten Ausführungsbeispiel 10 ist die gesamte Mikrowelleneinkopplungsstruktur von einem Resonatorgas erfüllt, so daß ein Resonatorgasvolumen 52 mit einem inneren Volumen der Mikrowelleneinkopplungsstruktur im wesentlichen identisch ist. Das Resonatorgas erfüllt zusätzlich noch einen Innenraum der jeweiligen Ansätze 32 und wird durch die Fenster 34 dieser Ansätze 32 von der Umgebung abgeschlossen.

Des weiteren sind vorteilhafterweise auch noch zwischen dem Mikrowellengenerator 12 und dem Hohlleiterstück 14 sowie dem Hohlleiterstück 22 und dem Mikrowellensumpf 24 gasdichte Mikrowellenfenster 54 bzw. 56 vorgesehen, welche verhindern, daß das Resonatorgas in den Mikrowellengenerator 12 oder auch in den Mikrowellensumpf 24 eintritt.

In Fig. 3 ist die von den die Mikrowelleneinkopplungsstruktur 16 durchlaufenden Mikrowellen erzeugte Feldstärke im Bereich der Mikrowelleneinkopplungsstruktur 16 durch die Pfeile 58 und 60 angegeben. Wie aus Fig. 3 deutlich ersichtlich ist, ist die Feldstärke zwischen den beiden Frontflächen 48 der Stege 42 und 44, gekennzeichnet durch die Pfeile 60, wesentlich größer als seitlich der Stege 42, 44 zwischen der unteren Wand 36 und der oberen Wand 38, gekennzeichnet durch die Pfeile 58. Damit wird also in dem Resonatorgasvolumen 52 durch die hohe Feldstärke zwischen den Stegen 42 und 44 bzw. ihren Frontflächen 48 ein mittlerer Bereich 62 mit einer hohen Feldstärke gebildet, an welchen sich seitlich der Stege 42, 44 ein äußerer Bereich 64 anschließt.

Um eine sprunghafte Änderung der Feldstärke zwischen den Stegen 42 und 44 zu erhalten, sind diese Stege 42, 44 erfindungsgemäß rechteckförmig ausgebildet, d.h. die Seitenflächen 46 verlaufen im wesentlichen senkrecht zu den Frontflächen 48. Damit ändert sich, wie durch die Pfeile 60 und 58 in Fig. 3 gekennzeichnet, die Feldstärke an einer Seitenkante 66, die durch die Frontfläche 48 und die Seitenfläche 46 der Stege 42, 44 gebildet wird, sprunghaft.

Erfindungsgemäß wird die Feldstärke zwischen den Stegen 42 und 44, gekennzeichnet durch die Pfeile 60, so hoch gewählt, daß sie über einem Schwellwert für eine Hochdruckgasentladung des Resonatorgases in diesem mittleren Bereich liegt. Außerdem wird die Feldstärke, gekennzeichnet durch die Pfeile 58, seitlich der Stege 42, 44 so niedrig gewählt, daß sie unterhalb des Schwellwertes für die Hochdruckgasentladung liegt.

Um eine möglichst gleichmäßige Anregung des Resonatorgases längs der optischen Achse 30 zu erreichen, verlaufen die Frontflächen 48 in Längsrichtung der ontischen Achse 30 schräg zu dieser, und zwar so, daß sie in Richtung der Ausbreitungsrichtung 49 der Mikrowellen aufeinander zu laufen, wie in Fig. 2 dargestellt ist.

Das erste Ausführungsbeispiel des erfindungsgemäßen Hochdruckgasentladungslasers arbeitet mit Mikrowellen, die im Bereich vom L-Band bis zum X-Band liegen können. Als Mikrowellengenerator 12 wird vorzugsweise ein Magnetron oder ein Klystron verwendet. Als Lasergas können alle excimerbildenden Gase Verwendung finden, welche vorzugsweise mit einem Druck von mindestens 0,5 bar vorliegen sollten. Die Energiedichten liegen über 100 kW pro cm$^3$, bezogen auf das Hochdruckgasentladungsvolumen, also den mittleren Bereich 62.

Bei diesen Werten findet in dem mittleren Bereich 62 eine im wesentlichen homogene Hochdruckgasentladung statt, welche nicht zum Wandkollaps neigt, so daß längs der optischen Achse 30 in dem optischen Resonator 26, umfassend die Spiegel 28, die optische Achse 30 und das Resonatorgasvolumen 52, eingeschlossen durch die Mikrowelleneinkopplungsstruktur 16 mit ihren Ansätzen 32 und den Fenstern 34, eine Lasertätigkeit mit hoher Intensität und Modenreinheit zu beobachten ist.

Eine Variante dieses ersten Ausführungsbeispiels 10 ist in Fig. 4 dargestellt. Die Mikrowelleneinkopplungsstruktur 16 als solche ist dabei identisch wie in Fig. 3 ausgebildet, allerdings erfüllt das Resonatorgasvolumen 52′ nicht den gesamten Innenraum der Mikrowelleneinkopplungsstruktur 16, sondern ist in einem Gasrohr 70 eingeschlossen, welches mit einer unteren Rohrwand 72 an der Frontfläche 48 des Stegs 42 und mit einer oberen Rohrwand 74 an der Frontfläche 48 des Stegs 44 anliegt und sich seitlich in Richtung der Seitenwände 40 so weit erstreckt, daß seine Rohrseitenwände 76 bezüglich der Seitenflächen 46 der Stege 42, 44 in Richtung der Seitenwände 40 der Mikrowelleneinkopplungsstruktur 16 versetzt angeordnet sind. Damit gewährleistet auch das Gasrohr 70, daß das Resonatorgasvolumen 52′ einen mittleren Bereich 62′ sowie einen äußeren Bereich 64′ aufweist, in welchen dieselben Feldbedingungen wie im mittleren Bereich 62 und äußeren Bereich 64 der ersten Variante des ersten Ausführungsbeispiels 10 vorliegen.

Vorteilhafterweise setzt sich das Gasrohr 70 über den Eingang 18 und den Ausgang 20 der Mikrowelleneinkopplungsstruktur hinaus in Form der Ansätze 32 fort und ist durch die Fenster 34 abgeschlossen.

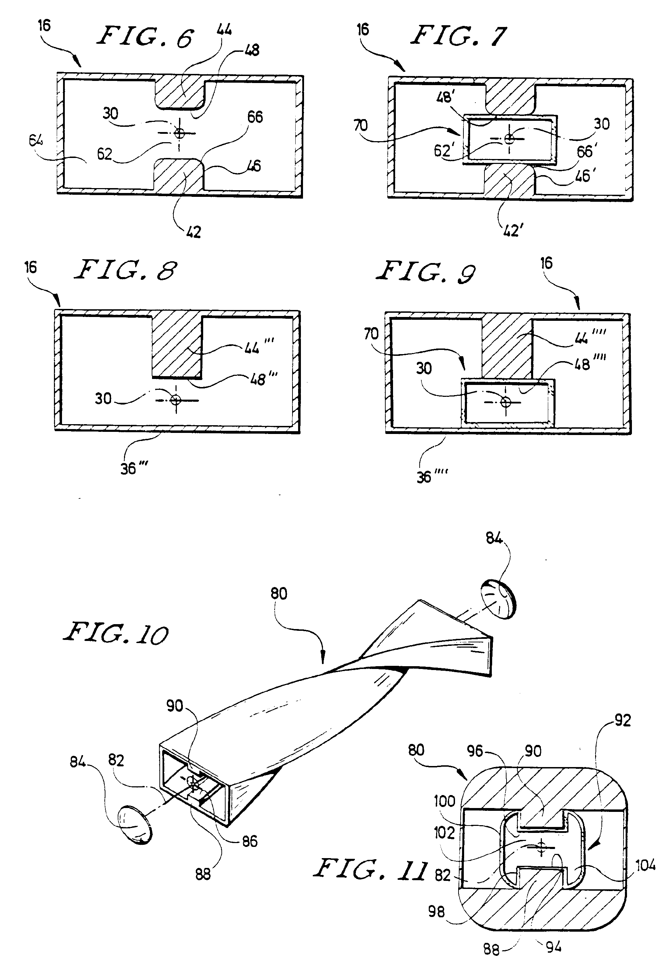

Eine dritte Variante des ersten Ausführungsbeispiels 10 ist in Fig. 5 dargestellt. Diese dritte Variante entspricht im wesentlichen der zweiten Variante in Fig. 4, mit dem Unterschied, daß die Stege 42″ und 44″ nicht aus leitendem Material, wie in Fig. 3 und Fig. 4, hergestellt sind, sondern aus einem dielektrischen Material. Mit dieser Anordnung wird jedoch dieselbe Aufteilung des Resonatorgasvolumens 52″ in einen mittleren Bereich 62″ und äußere Bereiche 64″ erreicht.

Die Fig. 6 und 7 stellen Abwandlungen der ersten und zweiten Variante, dargestellt in den Fig. 3 und 4 des ersten Ausführungsbeispiels 10 dar. Bei diesen sind im Gegensatz zu den Fig. 3 und 4 die Seitenkanten 66, 66′ der Stege 42, 42′ abgerundet. Außerdem können auch noch die Seitenflächen 46 und 46′ geringfügig gegen die Senkrechte zur Frontfläche 48 bzw. 48′ geneigt sein. Derartige Varianten erlauben eine vorteilhafte Ausbildung des elektrischen Feldes in den mittleren Bereichen 62 und 62′, die homogener ist als bei exakt rechteckigen Stegen 42, 44 bzw. 42′, 44′ in den Fig. 3 und 4. Bezüglich der exakten Form der Stege gemäß den Fig. 6 und 7 wird auf Berechnungsmethoden von E. A. Stappaerts in Appl. Phys. Lett. 40 (12) 1982, P.Y. Chang in Review of Scientific Instruments, Vol. 44, (4), Seite 405, 1973 und W. Rogowski in Archiv für Elektrotechnik, XII, Seite 1, 1923, verwiesen.

Weitere Varianten des ersten Ausführungsbeispiels 10 sind in den Fig. 8 und 9 dargestellt, bei diesen Varianten entfällt der untere Steg 42, dagegen ist der obere Steg 44‴ bzw. 44⁗ wesentlich höher und die optische Achse 30 ist in Richtung der unteren Wand 36‴ bzw. 36⁗ soweit versetzt, daß sie wiederum mittig zwischen der Frontfläche 48‴ und 48⁗ der Stege 44‴ imd 44⁗ liegt. Ansonsten liegen im Prinzip dieselben Feldbedingungen wie bei allen übrigen Varianten des ersten Ausführungsbeispiels vor.

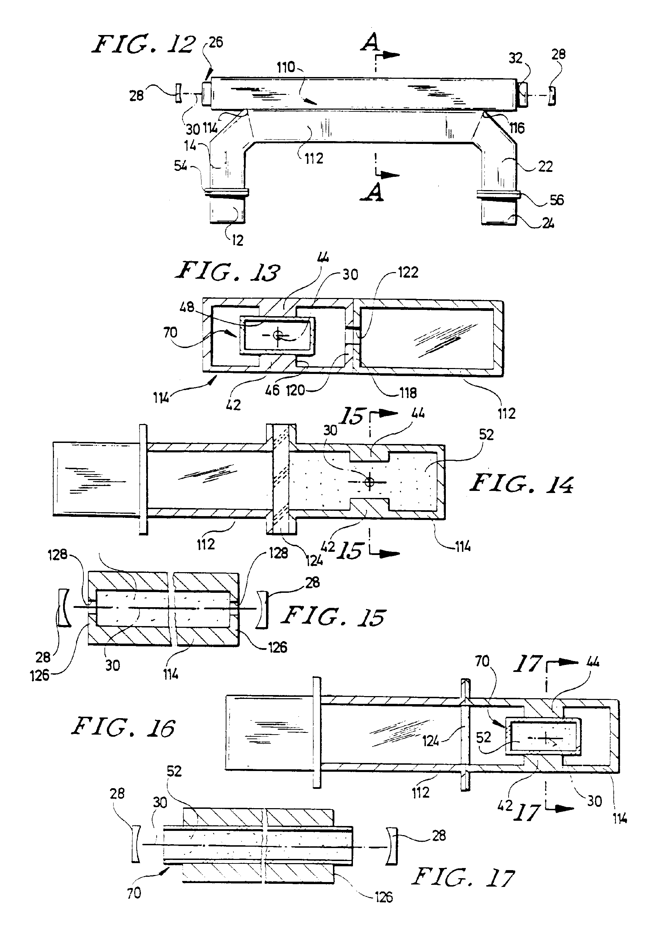

Bei einem zweiten Ausführungsbeispiel, dargestellt in Fig. 10, sind lediglich die Mikrowelleneinkopplungsstruktur 80 sowie die optische Achse 82 des optischen Resonators und die konzentrisch zu dieser angeordneten Spiegel 84 zeichnerisch dargestellt. Die Mikrowelleneinkopplungsstruktur 80 hat denselben querschnitt wie die Mikrowelleneinkopplungsstruktur 16, dargestellt in Fig. 3 mit dem einzigen Unterschied, daß diese Mikrowelleneinkopplungsstruktur schraubenförmig um die optische Achse 82 ausgebildet ist, um in dem mittleren Bereich 86 zwischen den Stegen 88 und 90 über die Länge des optischen Resonators gemittelt eine in allen radialen Richtungen zur optischen Achse gleichmäßige Feldverteilung zu erreichen. Eine derartige radialsymmetrische Entladungsgeometrie hat den Vorteil, daß die Intensität und vor allem die Modenreinheit des Lasers noch verbessert werden kann.

Eine weitere Variante des zweiten Ausführungsbeispiels dargestellt in Fig. 11, zeigt eine besondere Ausführungsform des Gasrohrs 92. Dieses weist ebenfalls eine untere Rohrwand 94 sowie eine obere Rohrwand 96 auf, umschließt jedoch die Stege 88 und 90 auch längs ihrer Seitenflächen 98 und bildet seitlich der Stege 88, 90 eine ungefähr halbovale Rohrseitenwand 100 aus. Diese Ausführung des Gasrohrs 92 hat den Vorteil, daß sie einen Wandkollaps noch wesentlich sicherer vermeidet, da im Übergang zwischen dem mittleren Bereich 102 und den äußeren Bereichen 104 die Wandflächen des Gasrohrs 92 zurückgenommen sind und daher das Resonatorgas auch im Bereich der sprunghaften Feldstärkeänderung vom mittleren Bereich 102 zum äußeren Bereich 104 keine Möglichkeit hat, an einer Wand des Gasrohrs 92 zu kollabieren oder die zum Wandkollaps führenden Oberflächenwellen oder Abschirmeffekte auszubilden.

Ein drittes Ausführungsbeispiel des erfindungsgemäßen Hochdruckgasentladungslasers, dargestellt mit mehreren Varianten in den Fig. 12 bis 17, zeigt eine besonders aufgebaute Mikrowelleneinkopplungsstruktur 110. Bei dieser Mikrowelleneinkopplungsstruktur 110 ist zwischen dem Mikrowellengenerator 12 mit dem Hohlleiterstück 14 und dem Hohlleiterstück 22 mit dem Mikrowellensumpf 24 ebenfalls ein Hohlleiterstück 112 vorgesehen, welches sich zwischen einem Eingang us und einem Ausgang 116 der Mikrowelleneinkopplungsstruktur 110 erstreckt. Parallel zu diesem Hohlleiterstück 112 erstreckt sich ein Hohlleiterresonator 114, in welchem mittig die optische Achse 30 des optischen Resonators 26 angeordnet ist. Dieser Hohlleiterresonator 114 ist ebenfalls, wie die Fig. 13, 14 und 16 zeigen, im Querschnitt vergleichbar mit dem ersten Ausführungsbeispiel aufgebaut. Der einzige Unterschied ist darin zu sehen, daß die Länge dieses Hohlleiterresonators 114 auf die jeweilige Mikrowellenfrequenz abgestimmt sein muß und daß in diesem Hohlleiterresonator 114 sich die Mikrowellen nicht längs der optischen Achse 30 ausbreiten, sondern längs der optischen Achse 30 stehende Wellen vorhander sind.

Die Fig. 13, 14 und 16 zeigen nun mehrere unterschiedliche Arten der Ankopplung dieses Hohlleiterresonators 114 an das Hohlleiterstück 112.

Bei der Variante in Fig. 13 liegt eine Seitenwand 118 des Hohlleiterstücks 112 an einer Seitenwand 120 des Hohlleiterresonators 114 an. Beide Seitenwände 118, 120 sind über die gesamte länge, über welche sie aneinander anliegen, mit einer Vielzahl aufeinanderfolgender Durchbrüche 122 versehen, durch welche eine Mikrowellenankopplung des Hohlleiterresonators an das Hohlleiterstück 112 erfolgt.

Diese Durchbrüche 122 können zwischen dem Eingang 114 und dem Ausgang 116 der Mikrowelleneinkopplungsstruktur zunehmend gröber ausgebildet werden, um durch unterschiedliche Kopplungsfaktoren längs des gesamten Hohlleiterresonators zu erreichen, daß die Feldstärke zwischen den Stegen 42 und 44 immer gleich groß ist, wie beispielsweise in der US-PS 4 513 424 angegeben.

Bei der Variante gemäß Fig. 14 sind die Seitenwände 118 und 120 des Hohlleiterstücks 112 und des Hohlleiterresonators 114 entfernt und durch ein druckdichtes Mikrowellenfenster ersetzt, welches zum einen eine Ankopplung des Hohlleiterresonators 114 an das Hohlleiterstück 112 erlaubt und zum andern eine druckdichte Wand für das Resonatorgasvolumen 52 darstellt und dieses damit gegenüber dem Hohlleiterstück 112 abschließt.

Zweckmäßigerweise muß bei einer Ausführungsform gemäß Fig. 14 der Hohlleiterresonator 114 an seinen Stirnwänden 126 mit Öffnungen 128 versehen sein, um einen parallel zur optischen Achse 30 verlaufenden Laserstrahl in Richtung auf die Spiegel 28 hin durchtreten zu lassen. Außerdem sind die Öffnungen 128 ihrerseits durch optische Fenster verschlossen.

Bei der Variante gemäß Fig. 16 muß das Mikrowellenfenster 124 nicht druckdicht ausgebildet sein, sondern es reicht ein einfaches Mikrowellenfenster, da das Resonatorgasvolumen 52 in dem Gasrohr 70 gefangen ist. Dabei erstreckt sich vorteilhafterweise das Gasrohr 70, wie in Fig. 17 dargestellt, über die Stirnseiten 126 des Hohlleiterresonators 114 hinaus und ist ebenfalls durch Fenster abgeschlossen.

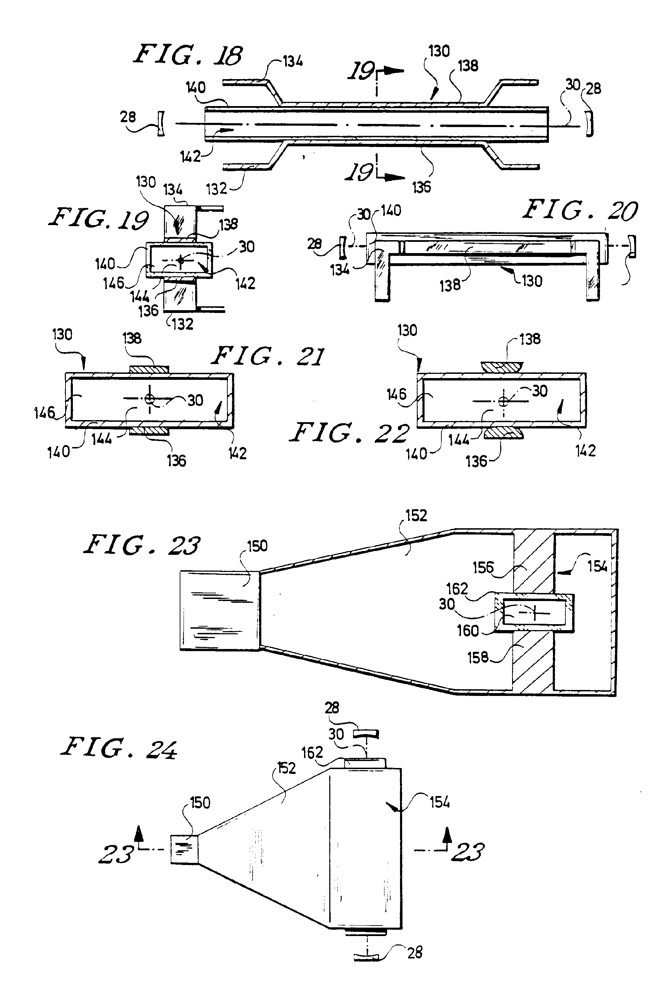

Ein drittes Ausführungsbeispiel, dargestellt in den Fig. 18 bis 22 zeigt eine aus TEM-Wellenleitern aufgebaute Mikrowelleneinkopplungsstruktur 130. Derartige TEM-Wellenleiter umfassen zwei parallel zueinander verlaufende Bandleiter 132 und 134. Diese Bandleiter 132 und 134 sind, um eine Mikrowelleneinkopplungsstruktur 130 auszubilden, aufeinander zugeführt und verlaufen im Bereich der Mikrowelleneinkopplungsstruktur 130 als Einkoppelleiter 136 und 138 in einem geringeren Abstand voneinander als die Bandleiter 132 und 134 vor und nach der Mikrowelleneinkopplungsstruktur 130. Diese Einkoppelleiter 136 und 138 ersetzen die Stege 42 und 44 bei den vorstehend beschriebenen Hohlleiterstrukturen.

Zwischen diesen Einkoppelleitern 136 und 138 ist ein Gasrohr 140 angeordnet, welches seitlich über die beiden Einkoppelleiter 136 und 138 hinausragt und damit in dem Resonatorgasvolumen 142 ebenfalls die Ausbildung eines mittleren Bereichs 144 und eines äußeren Bereichs 146 mit derselben Feldverteilung wie bei den Hohlleiterresonatoren ermöglicht.

Wie in den Fig. 19 und 20 dargestellt, erstreckt sich dieses Gasrohr 140 ebenfalls parallel zu der mittig zu diesem verlaufenden optischen Achse 30 des optischen Resonators 26 mit den Spiegeln 28.

Die Fig. 21 und 22 zeigen noch unterschiedliche Arten der Ausbildung der Einkoppelleiter 136 und 138.

Während die Einkoppelleiter 136, 138 in Fig. 21 einen streng rechteckigen Querschnitt aufweisen, sind die Einkoppelleiter in Fig. 22 im Bereich ihrer dem Gasrohr 140 zugewandten Seitenkanten abgerundet, ähnlich wie die Stege in den Varianten gemäß Fig. 6 und 7 des ersten Ausführungsbeispiels. Dadurch kann in Anlehnung an die Darlegungen zu diesen besonders ausgebildeten Stegformen eine homogenere Feldverteilung in dem mittleren Bereich 144 erhalten werden.

Selbstverständlich können auch aus TEM-Wellenleitern resonante Mikrowelleneinkopplungsstrukturen aufgebaut werden, bei welchen ebenfalls eine Ankopplung an einen durchlaufenen TEM-Wellenleiter, vorzugsweise über eine Richtkopplerstruktur, erfolgt.

Während bei sämtlichen bisher beschriebenen Ausführungsbeispielen sich die Mikrowellen sowohl bei Strukturen mit laufenden als auch bei Strukturen mit stehenden Wellen stets parallel zur optischen Achse ausbreiten, ist bei einem fünften Ausführungsbeispiel des erfindungs-gemäßen Hochdruckgasentladungslasers, dargestellt in den Fig. 23 und 24 vorgesehen, daß sich die Mikrowellen quer zur optischen Achse 30 ausbreiten.

Für einen solchen Aufbau ist ein Mikrowellengenerator 150 vorgesehen, von welchem aus sich ein trichterförmiger Mikrowellenleiter 152 bis zu einer Mikrowelleneinkopplungsstruktur 154 erstreckt. Bei dieser Mikrowelleneinkopplungsstruktur 154 verlaufen die Stege 156 und 158 quer zu einer Einkopplungsrichtung der Mikrowellen und parallel zu der optischen Achse 30.

Das Resonatorgasvolumen 160 kann ebenfalls,wie bei den Ausführungsbeispielen mit einer Hohlleiterstruktur, entweder den gesamten Innenraum der Mikrowelleneinkopplungsstruktur 154 einnehmen, oder, wie in Fig. 23 dargestellt, in einem Gasrohr 162 eingeschlossen sein, das sich ebenfalls wieder seitlich über die Stege 156 und 158 hinaus erstreckt, um in dem Resonatorgasvolumen 160 die Ausbildung des mittleren Bereichs und beiderseits von diesem äußerer Bereiche zu gewährleisten.


## Patentansprüche

1. Mikrowellengepumpter Hochdruckgasentladungslaser, insbesondere Excimerlaser, mit einem optischen Resonator, einem in diesem angeordneten und sich längs einer optischen Achse von diesem erstreckenden Resonatorgasvolumen, mit einer das Resonatorgasvolumen zwischen sich einschließenden Mikrowelleneinkopplungsstruktur und mit einem mit letzterer verbundenen Mikrowellengenerator, **dadurch gekennzeichnet** , daß innerhalb des Resonatorgasvolumens (52) in einer Richtung quer zur optischen Achse (30) ein mittlerer Bereich (62, 102) mit einer über einem Schwellwert für eine Hochdruckgasentladung liegenden elektrischen Feldstärke vorgesehen ist, an welchen sich beiderseits jeweils äußere Bereiche (64, 104) mit einer unterhalb des Schwellwertes für die Hochdruckgasentladung liegenden Feldstärke anschließen.

2. Hochdruckgasentladungslaser nach Anspruch 1, dadurch gekennzeichnet, daß sich die Feldstärke beim Übergang von dem mittleren Bereich (62, 102) zu den äußeren Bereichen (64, 104) sprunghaft ändert.

3. Hochdruckgasentladungslaser nach einem der Ansprüche 1 und 2, dadurch gekennzeichnet, daß das Resonatorgasvolumen (52) von einem Gasrohr (70, 92, 140, 162) umschlossen ist.

4. Hochdruckgasentladungslaser nach Anspruch 3, dadurch gekennzeichnet, daß das Gasrohr (70, 92, 140, 162) aus dielektrischem Material hergestellt ist.

5. Hochdruckgasentladungslaser nach einem der Ansprüche 1 und 2, dadurch gekennzeichnet, daßdas Resonatorgasvolumen (52) von der Mikrowelleneinkopplungsstruktur (16, 80, 110, 130, 154) umschlossen ist.

6. Hochdruckgasentladungslaser nach einem der voranstehenden Ansprüche, dadurch gekennzeichnet, daß das Resonatorgasvolumen (52) in Richtung quer zur optischen Achse (30) über die von der elektrischen Feldstärke durchsetzten Bereiche (62, 64, 102, 104) hinausreicht.

7. Hochdruckgasentladungslaser nach einem der voranstehenden Ansprüche, dadurch gekennzeichnet, daß die Feldstärke innerhalb des mittleren Bereichs (62, 102) quer zur optischen Achse (30) konstant ist.

8. Hochdruckgasentladungslaser nach einem der voranstehenden Ansprüche, dadurch gekennzeichnet, daß die Ausbreitungsrichtung der Mikrowellen in der Mikrowelleneinkopplungsstruktur (16, 80, 110, 130) parallel zur optischen Achse (30) verläuft.

9. Hochdruckgasentladungslaser nach Anspruch 8, dadurch gekennzeichnet, daß die elektrische Feldstärke im mittleren Bereich (62,102) längs der Ausbreitungsrichtung der Mikrowellen im wesentlichen konstant ist.

10. Hochdruckgasentladungslaser nach einem der Ansprüche 1 bis 7, dadurch gekennzeichnet, daß die Ausbreitungsrichtung der Mikrowellen in der Mikrowelleneinkopplungsstruktur (154) quer zur optischen Achse (30) verläuft.

11. Hochdruckgasentladungslaser nach einem der voranstehenden Ansprüche, dadurch gekennzeichnet, daß die Mikrowelleneinkopplungsstruktur (16,80,130, 154) eine Travelling-Wave-Struktur ist.

12. Hochdruckgasentladungslaser nach einem der Ansprüche 1 bis 10, dadurch gekennzeichnet, daß die Mikrowelleneinkopplungsstruktur (110,154) eine resonante Struktur ist.

13. Hochdruckgasentladungslaser nach einem der voranstehenden Ansprüche, dadurch gekennzeichnet, daß die Mikrowelleneinkopplungsstruktur (16,80,110, 130,154) einen oberhalb und einen unterhalb des Resonatorgasvolumens (52) angeordneten Leiter (Steg 42,44,88,90,156,158; Einkoppelleiter 136, 138) aufweist.

14. Hochdruckgasentladungslaser nach Anspruch 13, dadurch gekennzeichnet, daß zwischen dem Leiter und dem Resonatorgasvolumen (52) ein Dielektrikum (42″,44″) angeordnet ist.

15. Hochdruckgasentladungslaser nach einem der Ansprüche 13 oder 14, dadurch gekennzeichnet, daß mindestens einer der Leiter (42,44,88,90,136,138, 156,158) sich in Richtung der optischen Achse (30) des Resonatorgasvolumens (52) mit konstanter Breite erstreckt.

16. Hochdruckgasentladungslaser nach einem der Ansprüche 13 bis 15, dadurch gekennzeichnet, daß mindestens einer der Leiter (42,44,88,90,136,138, 156,158) einen ungefähr rechteckigen Querschnitt aufweist.

17. Hochdruckgasentladungslaser nach einem der Ansprüche 13 bis 15, dadurch gekennzeichnet, daß die Leiter (42′,44′,136,138) profilierte Querschnitte ähnlich eines Stappaerts- oder Changoder Rogowski-Profils aufweisen.

18. Hochdruckgasentladungslaser nach einem der voranstehenden Ansprüche, dadurch gekennzeichnet, daß die Mikrowelleneinkopplungsstruktur (110) durch eine Richtkopplerstruktur an eine Mikrowellenleitung angekoppelt ist.

19. Hochdruckgasentladungslaser nach Anspruch 18, dadurch gekennzeichnet, daß die Richtkopplerstruktur so aufgebaut ist, daß in der Mikrowelleneinkopplungsstruktur (110) in Richtung der optischen Achse (30) eine im wesentlichen gleichmäßige Feldstärkeverteilung entsteht.

20. Hochdruckgasentladungslaser nach einem der voranstehenden Ansprüche, dadurch gekennzeichnet, daß die Mikrowelleneinkopplungsstruktur (16,80,110) eine Hohlleiterstruktur ist.

21. Hochdruckgasentladungslaser nach Anspruch 20, dadurch gekennzeichnet, daß die Hohlleiterstruktur einen nach innen abstehenden Steg (42,44,88,90, 156,158) aufweist.

22. Hochdruckgasentladungslaser nach Anspruch 20, dadurch gekennzeichnet, daß die Hohlleiterstruktur zwei einander gegenüberliegende Stege (42,44,88, 90,156,158) aufweist.

23. Hochdruckgasentladungslaser nach einem der Ansprüche 20 oder 21, dadurch gekennzeichnet, daß der Leiter durch die Hohlleiterstruktur und die Stege (42,44,88,90,156,158) aus dielektrischem Material gebildet sind.

24. Hochdruckgasentladungslaser nach Anspruch 21 oder 22, dadurch gekennzeichnet, daß mindestens ein Leiter als Steg (42,44,88,90,156,158) ausgebildet ist.

25. Hochdruckgasentladungslaser nach Anspruch 24, dadurch gekennzeichnet, daß beide Leiter als Stege (42,44,88,90,156,158) ausgebildet sind.

26. Hochdruckgasentladungslaser nach einem der Ansprüche 21 bis 25, dadurch gekennzeichnet, daß mindestens einer der Stege (42,44,88,90,156,158) eine in Längsrichtung der optischen Achse (30) schräg zu dieser verlaufende Frontfläche (48) aufweist.

27. Hochdruckgasentladungslaser nach einem der Ansprüche 1 bis 19, dadurch gekennzeichnet, daß die Mikrowelleneinkopplungsstruktur (130) als Einkoppelleiter (136,138) aufweisende TEM-Wellen-leiterstruktur ausgebildet ist.

28. Hochdruckgasentladungslaser nach Anspruch 27, dadurch gekennzeichnet, daß mindestens ein Einkoppelleiter (136,138) in Längsrichtung der optischen Achse (30) schräg zu dieser verläuft.

29. Hochdruckgasentladungslaser nach einem der voranstehenden Ansprüche, dadurch gekennzeichnet, daß das Resonatorgasvolumen (52) ein abgeschlossenes Volumen ist.

30. Hochdruckgasentladungslaser nach einem der Ansprüche 1 bis 28, dadurch gekennzeichnet, daß das Resonatorgasvolumen (52) gasdurchströmt ist.

31. Hochdruckgasentladungslaser nach einem der voranstehenden Ansprüche, dadurch gekennzeichnet, daß dem mittleren Bereich (62,102) des Resonatorgasvolumens (52) zugewandte Oberflächen reflexionsfrei ausgebildet sind.

32. Hochdruckgasentladungslaser nach Anspruch 31, dadurch gekennzeichnet, daß dem mittleren Bereich (62, 102) des Resonatorgasvolumens (52) zugewandte Oberflächen der Leiter (42, 44, 88, 90, 136, 138, 156, 158) reflexionsfrei ausgebildet sind.

33. Hochdruckgasentladungslaser nach einem der Ansprüche 31 oder 32, dadurch gekennzeichnet, daß dem mittlerer. Bereich (62, 102) des Resonatorgasvolumens (52) zugewandte Oberflächen des Gasrohrs (70, 92, 140, 162) reflexionsfrei ausgebildet sind.

34. Hochdruckgasentladungslaser nach einem der voranstehenden Ansprüche, dadurch gekennzeichnet, daß die Mikrowelleneinkopplungsstruktur (80) schraubenförmig um die optische Achse (30) verdreht ist.

## Claims

1. High-pressure, gas discharge laser pumped by microwaves, in particular an excimer laser, comprising an optical resonator, a resonator gas volume arranged therein and extending along an optical axis thereof, a microwave coupling structure enclosing the resonator gas volume within it and a microwave generator connected to the microwave coupling structure, characterized in that within the resonator gas volume (52) in a direction transverse to the optical axis (30) a central region (62, 102) having an electrical field intensity above a threshold value for a high-pressure gas discharge is provided, said region being adjoined on both sides by outer regions (64, 104) having a field intensity below the threshold value for the high-pressure gas discharge.

2. High-pressure, gas discharge laser as defined in claim 1, characterized in that the field intensity changes abruptly at the transition from the central region (62, 102) to the outer regions (64, 104).

3. High-pressure, gas discharge laser as defined in one of claims 1 and 2, characterized in that the resonator gas volume (52) is enclosed by a gas tube (70, 92, 140, 162).

4. High-pressure, gas discharge laser as defined in claim 3, characterized in that the gas tube (70, 92, 140, 162) is produced from a dielectric material.

5. High-pressure, gas discharge laser as defined in one of claims 1 and 2, characterized in that the resonator gas volume (52) is enclosed by the microwave coupling structure (16, 80, 110, 130, 154).

6. High-pressure, gas discharge laser as defined in any of the preceding claims, characterized in that the resonator gas volume (52) extends in the direction transverse to the optical axis (30) beyond the regions (62, 64, 102, 104) penetrated by the electrical field intensity.

7. High-pressure, gas discharge laser as defined in any of the preceding claims, characterized in that the field intensity within the central region (62, 102) is constant transversely to the optical axis (30).

8. High-pressure, gas discharge laser as defined in any of the preceding claims, characterized in that the direction of propagation of the microwaves in the microwave coupling structure (16, 80, 110, 130) extends parallel to the optical axis (30).

9. High-pressure, gas discharge laser as defined in claim 8, characterized in that the electrical field intensity in the central region (62, 102) is essentially constant along the direction of propagation of the microwaves.

10. High-pressure, gas discharge laser as defined in any of claims 1 to 7, characterized in that the direction of propagation of the microwaves in the microwave coupling structure (154) extends transversely to the optical axis (30).

11. High-pressure, gas discharge laser as defined in any of the preceding claims, characterized in that the microwave coupling structure (16, 80, 130, 154) is a travelling wave structure.

12. High-pressure, gas discharge laser as defined in any of claims 1 to 10, characterized in that the microwave coupling structure (110, 154) is a resonant structure.

13. High-pressure, gas discharge laser as defined in any of the preceding claims, characterized in that the microwave coupling structure (16, 80, 110, 130, 154) has a conductor (bridges 42, 44, 88, 90, 156, 158; coupling conductors 136, 138) arranged both above and below the resonator gas volume (52).

14. High-pressure, gas discharge laser as defined in claim 13, characterized in that a dielectric (42″, 44″) is arranged between the conductor and the resonator gas volume (52).

15. High-pressure, gas discharge laser as defined in one of claims 13 or 14, characterized in that at least one of the conductors (42, 44, 88, 90, 136, 138, 156, 158) extends with a constant width in the direction of the optical axis (30) of the resonator gas volume (52).

16. High-pressure, gas discharge laser as defined in any of claims 13 to 15, characterized in that at least one of the conductors (42, 44, 88, 90, 136, 138, 156, 158) has an approximately rectangular cross section.

17. High-pressure, gas discharge laser as defined in any of claims 13 to 15, characterized in that the conductors (42′, 44′, 136, 138) have profiled cross sections similar to aStappaerts, Chang or Rogowski profile.

18. High-pressure, gas discharge laser as defined in any of the preceding claims, characterized in that the microwave coupling structure (110) is coupled to a microwave wave guide by a directional coupler structure.

19. High-pressure, gas discharge laser as defined in claim 18, characterized in that the directional coupler structure is designed such that an essentially uniform field intensity distribution results in the microwave coupling structure (110) in the direction of the optical axis (30).

20. High-pressure, gas discharge laser as defined in any of the preceding claims, characterized in that the microwave coupling structure (16, 80, 110) is a wave guide structure.

21. High-pressure, gas discharge laser as defined in claim 20, characterized in that the wave guide structure has an inwardly protruding bridge (42, 44, 88, 90, 156, 158).

22. High-pressure, gas discharge laser as defined in claim 20, characterized in that the wave guide structure has two opposed bridges (42, 44, 88, 90, 156, 158).

23. High-pressure, gas discharge laser as defined in one of claims 20 or 21, characterized in that the conductor is formed by the wave guide structure and the bridges (42, 44, 88, 90, 156, 158) are of a dielectric material.

24. High-pressure, gas discharge laser as defined in claim 21 or 22, characterized in that at least one conductor is designed as a bridge (42, 44, 88, 90, 156, 158).

25. High-pressure, gas discharge laser as defined in claim 24, characterized in that both conductors are designed as bridges (42, 44, 88, 90, 156, 158).

26. High-pressure, gas discharge laser as defined in any of claims 21 to 25, characterized in that at least one of the bridges (42, 44, 88, 90, 156, 158) has a front surface (48) extending in the longitudinal direction of the optical axis (30) at an incline thereto.

27. High-pressure, gas discharge laser as defined in any of claims 1 to 19, characterized in that the microwave coupling structure (130) is designed as a TEM wave guide structure comprising coupling conductors (136, 138).

28. High-pressure, gas discharge laser as defined in claim 27, characterized in that at least one coupling conductor (136, 138) extends in the longitudinal direction of the optical axis (30) at an incline thereto.

29. High-pressure, gas discharge laser as defined in any of the preceding claims, characterized in that the resonator gas volume (52) is a closed volume.

30. High-pressure, gas discharge laser as defined in any of claims 1 to 28, characterized in that the resonator gas volume (52) has gas flowing therethrough.

31. High-pressure, gas discharge laser as defined in any of the preceding claims, characterized in that surfaces facing the central region (62, 102) of the resonator gas volume (52) are designed to be non-reflecting.

32. High-pressure, gas discharge laser as defined in claim 31, characterized in that surfaces of the conductors (42, 44, 88, 90, 136, 138, 156, 158) facing the central region (62, 102) of the resonator gas volume (52) are designed to be non-reflecting.

33. High-pressure, gas discharge laser as defined in one of claims 31 or 32, characterized in that surfaces of the gas tube (70, 92, 140, 162) facing the central region (62, 102) of the resonator gas volume (52) are designed to be non-reflecting.

34. High-pressure, gas discharge laser as defined in any of the preceding claims, characterized in that the microwave coupling structure (80) is twisted helically about the optical axis (30).

**Revendications**

1. Laser à décharge dans un gaz sous pression élevée et à pompage par micro-ondes, en particulier laser excimère, comprenant une cavité résonante optique, un volume de gaz de la cavité résonante qui est situé dans cette dernière et s'étend le long d'un axe optique de cette cavité, une structure de couplage des micro-ondes qui enferme en elle le volume de gaz de la cavité résonante et un générateur de micro-ondes qui est relié à cette structure, caractérisé en ce qu'il est prévu à l'intérieur du volume (52) de gaz de la cavité résonante, et dans une direction perpendiculaire à l'axe optique (30), une zone médiane (62,102),dans laquelle règne une intensité du champ électrique qui est supérieure à un seuil de déclenchement de la décharge dans un gaz sous pression élevée, et des zones extérieures (64,104) qui se raccordent respectivement à chacun des deux côtés de la zone médiane, et dans lesquelles l'intensité du champ est inférieure au seuil de déclenchement de la décharge dans un gaz sous pression élevée.

2. Laser à décharge dans un gaz sous pression élevée selon la revendication 1, caractérisé en ce que l'intensité du champ varie brusquement à la transition de la zone médiane (62, 102) aux zones extérieures (64, 104).

3. Laser à décharge dans un gaz sous pression élevée selon l'une des revendications 1 et 2, caractérisé en ce que le volume de gaz (52) de la cavité résonante est enfermé dans un tube (70, 92, 140, 162).

4. Laser à décharge dans un gaz sous pression élevée selon la revendication 3, caractérisé en ce que le tube renfermant le gaz (70, 72, 140, 162) est réalisé en matériau diélectrique.

5. Laser à décharge dans un gaz sous pression élevée selon l'une des revendications 1 et 2, caractérisé en ce que le volume de gaz (52) de la cavité résonante est enveloppé par la structure de couplage des micro-ondes (16, 80, 110, 130, 154)

6. Laser à décharge dans un gaz sous pression élevée selon l'une des revendications précédentes, caractérisé en ce que le volume de gaz (52) de la cavité résonante déborde perpendiculairement à l'axe optique (30) les zones (62, 64, 102, 104) qui sont soumises à l'intensité du champ électrique.

7. Laser à décharge dans un gaz sous pression élevée selon l'une des revendications précédentes, caractérisé en ce que l'intensité du champ est constante perpendiculairement à l'axe optique (30) à l'intérieur de la zone médiane (62, 102).

8. Laser à décharge dans un gaz sous pression élevée selon l'une des revendications précédentes, caractérisé en ce que la direction de propagation des micro-ondes à l'intérieur de la structure de couplage des micro-ondes (16, 80, 110, 130) est parallèle à l'axe optique (30).

9. Laser à décharge dans un gaz sous pression élevée selon la revendication 8, caractérisé en ce que l'intensité du champ électrique est sensiblement constante dans la zone médiane (62, 102) le long de la direction de propagation des micro-ondes.

10. Laser à décharge dans un gaz sous pression élevée selon l'une des revendications 1 à 7, caractérisé en ce que la direction de propagation des micro-ondes est perpendiculaire à l'axe optique (30) dans la structure (154) de couplage des micro-ondes.

11. Laser à décharge dans un gaz sous pression élevée selon l'une des revendications précédentes, caractérisé en ce que la structure de couplage des micro-ondes (16, 80, 130, 154) est une structure à ondes progressives.

12. Laser à décharge dans un gaz sous pression élevée selon l'une des revendications 1 à 10, caractérisé en ce que la structure de couplage des micro-ondes (110, 154) est une structure résonante.

13. Laser à décharge dans un gaz sous pression élevée selon l'une des revendications précédentes, caractérisé en ce que la structure de couplage des micro-ondes (16, 80, 110, 130, 154) comprend un guide (nervure 42, 44, 88, 90, 156, 158 ; guide de couplage 136, 138) qui est disposé au-dessus et un tel guide disposé au-dessous du volume de gaz (52) de la cavité résonante.

14. Laser à décharge dans un gaz sous pression élevée selon la revendication 13, caractérisé en ce qu'un diélectrique (42″, 44″) est disposé entre le guide et le volume de gaz (52) de la cavité résonante.

15. Laser à décharge dans un gaz sous pression élevée selon l'une des revendications 13 ou 14, caractérisé en ce qu'au moins l'un des guides (42, 44, 88, 90, 136, 138, 156, 158) est orienté dans la direction de l'axe optique (30) du volume de gaz (52) de la cavité résonante et sa largeur est constante.

16. Laser à décharge dans un gaz sous pression élevée selon l'une des revendications 13 à 15, caractérisé en ce qu'au moins l'un des guides (42, 44, 88, 90, 136, 138, 156, 158) a une section au moins approximativement rectangulaire.

17. Laser à décharge dans un gaz sous pression élevée selon l'une des revendications 13 à 15, caractérisé en ce que les guides (42′, 44′, 136, 138) ont une section profilée analogue à celle d'un profil de Stappaerts ou de Chang ou de Rogowski.

18. Laser à décharge dans un gaz sous pression élevée selon l'une des revendications précédentes, caractérisé en ce que la structure de couplage des micro-ondes (110) est couplée à un guide de micro-ondes par une structure de coupleur directif.

19. Laser à décharge dans un gaz sous pression élevée selon la revendication 18, caractérisé en ce que la structure de coupleur directif est constituée de manière qu'il en résulte une distribution sensiblement régulière de l'intensité du champ dans la structure de couplage des micro-ondes (110) dans la direction de l'axe optique (30).

20. Laser à décharge dans un gaz sous pression élevée selon l'une des revendications précédentes, caractérisé en ce que la structure de couplage des micro-ondes (16, 80, 110) est une structure à guide d'ondes.

21. Laser à décharge dans un gaz sous pression élevée selon la revendication 20, caractérisé en ce que la structure à guide d'ondes comporte une nervure saillante intérieurement (42, 44, 88, 90, 156, 158).

22. Laser à décharge dans un gaz sous pression élevée selon la revendication 20, caractérisé en ce que la structure à guide d'ondes comprend deux nervures opposées (42, 44, 88, 90, 156, 158).

23. Laser à décharge dans un gaz sous pression élevée selon l'une des revendications 20 ou 21, caractérisé en ce que le guide est formé d'une structure à guide d'ondes et les nervures (42, 44, 88, 90, 156, 158) sont en matériau diélectrique.

24. Laser à décharge dans un gaz sous pression élevée selon l'une des revendications 21 ou 22, caractérisé en ce qu'au moins un guide est conformé en nervure (42, 44, 88, 90, 156, 158).

25. Laser à décharge dans un gaz sous pression élevée selon la revendication 24, caractérisé en ce que les deux guides sont conformés en nervures (42, 44, 88, 90, 156, 158).

26. Laser à décharge dans un gaz sous pression élevée selon l'une des revendications 21 à 25, caractérisé en ce qu'au moins l'une des nervures (42, 44, 88, 90, 156, 158) comporte une surface frontale (48) qui oblique sur l'axe optique (30) dans la direction de la longueur de ce dernier.

27. Laser à décharge dans un gaz sous pression élevée selon l'une des revendications 1 à 19, caractérisé en ce que la structure de couplage des micro-ondes (130) est conformée en structure de guide d'ondes en mode TEM comportant un guide de couplage (136, 138).

28. Laser à décharge dans un gaz sous pression élevée selon la revendication 27, caractérisé en ce qu'au moins un guide de couplage (136, 138) est orienté obliquement sur l'axe optique (30) dans la direction de la longueur de ce dernier.

29. Laser à décharge dans un gaz sous pression élevée selon l'une des revendications précédentes, caractérisé en ce que le volume de gaz (52) de la cavité résonante est un volume fermé.

30. Laser à décharge dans un gaz sous pression élevée selon l'une des revendications 1 à 28, caractérisé en ce que le volume de gaz (52) de la cavité résonante est balayé par du gaz.

31. Laser à décharge dans un gaz sous pression élevée selon l'une des revendications précédentes, caractérisé en ce que les surfaces tournées vers la zone médiane (62, 102) du volume de gaz (52) de la cavité résonante sont réalisées de manière à être non réfléchissantes.

32. Laser à décharge dans un gaz sous pression élevée selon la revendication 31, caractérisé en ce que les surfaces des guides (42, 44, 88, 90, 136, 138, 156, 158) tournées vers la zone médiane (62, 102) du volume de gaz (52) de la cavité résonante sont conformées de manière à être non réfléchissantes.

33. Laser à décharge dans un gaz sous pression élevée selon l'une des revendications 31 ou 32, caractérisé en ce que les surfaces du tube (70, 92, 140, 187) renfermant le gaz qui sont tournées vers la zone médiane (62, 102) du volume de gaz (52) de la cavité résonante sont réalisée de manière à être non réfléchissantes.

34. Laser à décharge dans un gaz sous pression élevée selon l'une des revendications précédentes, caractérisé en ce que la structure de couplage des micro-ondes (80) est torsadée en hélice autour de l'axe optique (30).

FIG. 1

FIG. 5

FIG. 2

FIG. 3

FIG. 4

FIG. 6

FIG. 7

FIG. 8

FIG. 9

FIG. 10

FIG. 11

EP 0 306 506 B1

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24